# EUROPÄISCHE PATENTSCHRIFT

(11) **EP 1 926 898 B1**
(45) Veröffentlichungstag und Bekanntmachung des Hinweises auf die Patenterteilung: **13.04.2016**
(21) Anmeldenummer: 06805657.1
(22) Anmeldetag: 06.09.2006
(51) Int. Cl.: F02D 41/02, F02D 41/14

(54) **LAMBDAREGELUNG MIT SAUERSTOFFMENGENBILANZIERUNG**
LAMBDA CONTROLLER WITH BALANCING OF THE QUANTITY OF OXYGEN
REGULATION LAMBDA AVEC EQUILIBRAGE DE LA QUANTITE D'OXYGENE

(30) Priorität: 19.09.2005 DE 102005044729
(43) Veröffentlichungstag der Anmeldung: 04.06.2008
(73) Patentinhaber: Volkswagen Aktiengesellschaft, 38440 Wolfsburg (DE)
(72) Erfinder: HAHN, Hermann, 30175 Hannover (DE)
(74) Vertreter: Pohlmann, Bernd Michael
(86) Internationale Anmeldenummer: PCT/EP2006/008690
(87) Internationale Veröffentlichungsnummer: WO 2007/033769

(56) Entgegenhaltungen:
- EP-A- 1 681 448
- WO-A-02/070884
- DE-A1- 19 922 175
- US-A1- 2004 244 363
- US-B1- 6 311 680

## Beschreibung

Die Erfindung betrifft ein Verfahren zur Lambdaregelung bei einem Verbrennungsmotor sowie eine Vorrichtung zur Lambdaregelung, jeweils gemäß dem Oberbegriff des entsprechenden unabhängigen Anspruchs.

Verfahren und Vorrichtungen zur Lambdaregelung bei Verbrennungsmotoren werden eingesetzt, um die Emissionen schädlicher Abgase in die Umwelt zu reduzieren, falls in der Abgasanlage des Verbrennungsmotors zumindest ein Katalysator angeordnet ist.. Um beispielsweise einen 3-Wege- Katalysator in einem optimalen Betriebspunkt zu halten, ist es notwendig, die Gemischaufbereitung des Verbrennungsmotors mit Hilfe einer Lambdaregelung so zu kontrollieren, dass sich zumindest im Mittelwert ein Lambdawert ergibt, der möglichst nahe bei 1,0 liegt. Es ist bekannt, hierzu einen vorderen Lambdaregelkreis mit einem stromab des Verbrennungsmotors und stromauf des Katalysators angeordneten vorderen Sauerstoffsensor und einen hinteren Lambdaregelkreis mit zumindest einem stromab des Katalysators angeordneten hinteren Sauerstoffsensor vorzusehen. Nachteiliger Weise sind solche Systeme mehr oder weniger langsam reagierend, so dass es zu unerwünschten Emissionsdurchbrüchen kommen kann, bei denen der Katalysator sich kurzzeitig nicht im optimalen Betriebspunkt befindet. Es wurde daher versucht, die Regelqualität durch eine bessere Auswertung der Sondensignale zu optimieren. Die Druckschriften DE 102 25 937 A1, DE 196 06 652 A1 und DE 103 39 063 A1 zeigen beispielhaft solche Systeme.

Es ist vorstellbar, dass Verhalten des Katalysators zu erfassen oder zu modellieren, so dass bereits ein Stelleingriff der Regelung erfolgt, bevor an den hinteren Sensor eine Abweichung von einem Sollwert erkannt wird. Insbesondere kann es sinnvoll sein, ein Katalysatormodell zur Erfassung der aktuell gespeicherten Sauerstoffmenge zu verwenden, da der im Katalysator gespeicherte Sauerstoff maßgeblich die Konvertierung von Schadstoffen und die Reaktion des Sensorsignals beeinflusst. Eine Information über den aktuellen Sauerstoffzustand des Katalysators kann auf unterschiedliche Weise für eine Verbesserung der Lambdaregelung eingesetzt werden. Hierzu zählen die Modifikation oder Ergänzung von Regelalgorithmen. Aus der Druckschrift DE 102 46 505 A1 ist ferner bereits ein Verfahren zur Aufheizung von Katalysatoren durch wechselnde Beladung mit unter- und überstöchiometrischem Abgas bekannt. Dabei wird ein Schwellwert für die aktuelle Sauerstoff-Speicherfähigkeit des Katalysators festegelegt, welcher mit Hilfe von Alter und Temperatur modelliert wird oder durch erzwungene Durchbrüche experimentell ermittelt werden kann. Der Abgasmassenstrom wird mit dem jeweiligen relativen Sauerstoff-Überschuss oder Sauerstoffbedarf multipliziert und das Produkt über die Zeit aufintegriert. Bei Erreichen des Schwellwertes erfolgt ein Phasenwechsel.

Ein problematischer Nachteil bei diesen Ansätzen ist es, dass der aktuelle Sauerstoffzustand des Katalysators mit hoher Genauigkeit bestimmt werden muss und darüber eine genaue Beschreibung der Korrelation zwischen Sauerstoffzustand und Konvertierungsleistung des Katalysators erforderlich ist, wenn eine Verbesserung der Lambdaregel erreicht werden soll, da ansonsten durch die Abweichung von modellierten Verhalten eine unzureichende Reaktion des Reglers die Folge ist. Es versteht sich, dass es auch denkbar ist zu ermitteln, ab welchem Zeitpunkt davon auszugehen ist, dass das Modell der Sauerstoff-Speicherfähigkeit des Katalysators das reale Verhalten nicht mehr hinreichend gut beschreibt und anschließend auf die Information über den aktuellen Sauerstoffzustand des Katalysators verzichtet wird. In diesem Fall würde die Lambdaregelung auf herkömmliche Weise allein basierend auf dem Signal der Sauerstoffsonden durchgeführt werden.

Aus der US 2004/0244363 A1 ist bereits eine Abgasanlage für einen Verbrennungsmotor mit zumindest einem Katalysator bekannt, bei dem ein vorderer Lambdaregelkreis und ein hinterer Lambdaregelkreis sowie zumindest ein stromab des Katalysators angeordneter hinterer Sauerstoffsensor vorgesehen ist. Von dem hinteren Lambdaregelkreis wird ein Ausgangssignal des hinteren Sauerstoffsensors verarbeitet. Es wird ein Differenzwert zu einem hinteren Soll-Lambdawert gebildet und eine auf dem Soll-Lambdawert des vorderen Lambdaregelkreises wirkende Stellgröße ausgegeben. Dabei wird über einen mathematischen Ansatz eines Integrationszusammenhangs zwischen dem Signal eines vorderen Sauerstoffsensors und des hinteren Sauerstoffsensors eine aktuelle Sauerstoffspeicherkapazität ermittelt.

Das von der Erfindung zu lösende Problem ist es, eine Lambdaregelung für Verbrennungsmotoren für eine möglichst gute Abgasreinigung zu ermöglichen.

Das der Erfindung zugrundliegende Problem wird durch ein Verfahren bzw. eine Vorrichtung mit den Merkmalen der unabhängigen Ansprüche gelöst.

Das erfindungsgemäße Verfahren zeichnet sich dadurch aus, dass nach einem Vorzeichenwechsel des Differenzwertes eines Ausgangssignals des hinteren Sauerstoffsensors zu einem hinteren Soll-Lambdawert aus der in den Katalysator eingetragenen und ausgetragenen Sauerstoffmenge eine bilanzierte Sauerstoffmenge für ein Zeitintervall seit dem Vorzeichenwechsel ermittelt und die Stellgröße des hinteren Lambdaregelkreises zusätzlich zum Ausgangssignal des hinteren Sauerstoffsensors in Abhängigkeit von der bilanzierten Sauerstoffmenge gewählt wird. Die Stellgröße, also die zugrunde liegenden Regelparameter des hinteren Lambdaregelkreise wird/werden in Abhängigkeit vom Ausgangssignal zusätzlich in Abhängigkeit von der Sauerstoffmengenbilanz gewählt. Die Sauerstoffmengenbilanz des Katalysators kann relativ leicht ermittelt werden und ermöglicht es, auf eine einfache Weise Informationen über den Sauerstoffzustand des Katalysators zur Verbesserung der Lambdaregelung zu nutzen. Der Stelleingriff des hinteren Reglers ist daher abhängig vom Signal des hinteren Sauerstoffsensors sowie zusätzlich von der Sauerstoffmengenbilanz (bilanzierte Sauerstoffmenge) des Katalysators.

Für den Fall eines durch das Ausgangssignal des hinteren Sauerstoffsensors als zu fett detektierten Abgases soll im Folgenden das Verfahren illustriert werden. In diesem Fall soll eine

Abmagerung des Abgases vorgenommen werden, bis zu einem Zeitpunkt zu dem das Ausgangssignal wieder auf den Sollwert abgefallen ist. Erfindungsgemäß wird nach dem Vorzeichenwechsel des Differenzwertes die bilanzierte Sauerstoffmenge ermittelt. In Abhängigkeit von der bilanzierten Sauerstoffmenge kann entschieden werden, ob eine weitere Beladung des Katalysators mit Sauerstoff erforderlich ist. Falls bereits eine für die aktuelle Konvertierung von Schadstoffen ausreichende Menge Sauerstoff im Katalysator vorhanden ist, ist es bedingt durch die Pufferwirkung des Katalysators, insbesondere der üblichen Katalysatorenbeschichtungen, nur eine Frage der Zeit, bis sich das Ausgangssignal der hinteren Sonde bei dem aktuellen Wert der Stellgröße auf den Sollwert hinbewegt. Der Wert der Stellgröße wird daher korrigiert. Insbesondere kann die Stellgröße reduziert werden. Falls andererseits, beispielsweise durch dynamische Vorgänge im Katalysator mehr Sauerstoff aus dem Katalysator ausgetragen wird, so führt dies zu einer Veränderung der bilanzierten Sauerstoffmenge und es kann eine Vergrößerung der Stellgröße vorgesehen werden. Analog umgekehrt ist das Vorgehen, wenn eine Anfettung des Abgases vorgenommen werden soll.

Bevorzugt ist es vorgesehen, die bilanzierte Sauerstoffmenge zu bewerten und dazu eine von der bilanzierten Sauerstoffmenge abhängige Bewertungsgröße zu bilden.

Bei einer bevorzugten Ausführungsform ist vorgesehen, einen auf die Stellgröße des hinteren Regelkreises wirkenden Regelparameter durch ein Kennfeld zu ermitteln. Das Kennfeld verwendet das Ausgangssignal des hinteren Sauerstoffsensors und die bilanzierte Sauerstoffmenge als Eingangsgrößen und ermittelt den Regelparameter. Bei dem Regelparameter kann es sich beispielsweise um einen Proportionalparameter und/oder einen Integralparameter handeln.

Bevorzugt ist alternativ oder zusätzlich vorgesehen, in Abhängigkeit von der bilanzierten Sauerstoffmenge einen Korrekturwert zur Erhöhung der Reglerstabilität zu bilden.

Es kann eine absolute Bewertungsgröße verwendet werden, bei der bevorzugt eine absolute Sauerstoffspeichermenge vorgegeben wird, welche unabhängig ist von der tatsächlichen aktuellen Sauerstoffspeicherfähigkeit des Katalysators.

Ferner kann eine auf eine vorgegebene Sauerstoffspeicherfähigkeit des Katalysators bezogene relative Bewertungsgröße aus der bilanzierten Sauerstoffmenge ermittelt werden. Bevorzugt kann beispielsweise die aktuelle bilanzierte Sauerstoffmenge auf die vorher bei umgekehrtem Vorzeichen der Differenzgröße insgesamt bilanzierte Sauerstoffmenge bezogen und daraus ein relatives Verhältnis ermittelt werden.

Bevorzugt ist die vorgegebene Sauerstoffspeicherfähigkeit eine maximale Sauerstoffspeicherfähigkeit des Katalysators. Ferner kann die vorgegebene Sauerstoffspeicherfähigkeit einer maximalen Schadstoffkonvertierung für einen vorgegebenen Schadstoff des Abgases des Verbrennungsmotors entsprechen, vorzugsweise eines NOX-, HC- oder CO-Anteils des Abgases. In beiden Fällen ist eine einfache Anpassung der Lambdaregelung an die Katalysatoreigenschaften erreichbar.

Es ist ferner vorteilhaft, die Bewertungsgröße und/oder die vorgegebene Sauerstoffspeicherfähigkeit in Abhängigkeit von dem aktuellen Wert einer Katalysatorkenngröße zu wählen. Vorzugsweise wird als aktueller Wert der Katalysatorkenngröße der Wert vor dem Zeitpunkt des Vorzeichenwechsels verwendet. Die Katalysatorkenngröße kann beispielsweise eine vollständige Füllung oder eine vollständige Leerung des Katalysators mit Sauerstoff charakterisieren. Derartige Zustände sind nach einer vorangegangenen Schubphase oder einer Fettbetriebsphase des Verbrennungsmotors zu erwarten und daher einfach zu detektieren oder zu prognostizieren.

Erfindungsgemäß ist es demnach möglich, die Regelung vorausschauend auszulegen und so die Regelqualität entscheidend zu verbessern. Beispielsweise kann erkannt werden, dass ausgehend von einem vollständig befüllten Katalysator und einem Sondensignal des hinteren Sauerstoffsensors, das einem mageren Gemisch entspricht. eine starke Anfettung durchgeführt werden kann. Vorteilhafter Weise kann die Anfettung zurückgefahren werden, bevor es zu einem Emissionsdurchbruch kommt, sobald gemäß der bilanzierten Sauerstoffmenge ein Sauerstofffüllstand mit einem optimalen Wert, beispielsweise 40 bis 60 % erreicht ist. Auf eine regelungstechnische einfache Weise, wird also die Anfettung reduziert, obwohl das Sondensignal noch von seinem Sollwert abweicht.

Das erfindungsgemäße Verfahren ist sowohl anwendbar, wenn der vordere Lambdaregelkreis mit einem stromab des Verbrennungsmotors und stromauf des Katalysators angeordneten vorderen Sauerstoffsensors versehen ist oder wenn dem vorderen Lambdaregelkreis ein modellierter Lambdawert zur Verfügung gestellt wird.

Das der Erfindung zugrunde liegende Problem, wird ferner durch eine Vorrichtung mit den Merkmalen des unabhängigen Vorrichtungsanspruchs gelöst. Diese zeichnet sich aus, durch eine Vorrichtung zur Ermittlung einer bilanzierten Sauerstoffmenge des Katalysators aus den in dem Katalysator eingetragenen und ausgetragenen Sauerstoffmengen, wobei nach einem Vorzeichenwechsel des Differenzwertes für ein Zeitintervall nach dem Vorzeichenwechsel die bilanzierte Sauerstoffmenge ermittelt wird und wobei der hintere Lambdaregelkreis ausgelegt ist, um die Stellgröße zusätzlich in Abhängigkeit von der bilanzierten Sauerstoffmenge zu bestimmen.

Weitere Vorteile ergeben sich aus den übrigen Unteransprüchen, der Zeichnung sowie der dazugehörigen Beschreibung. Im Folgenden wird ein Ausführungsbeispiel der Erfindung anhand der Zeichnung näher erläutert:

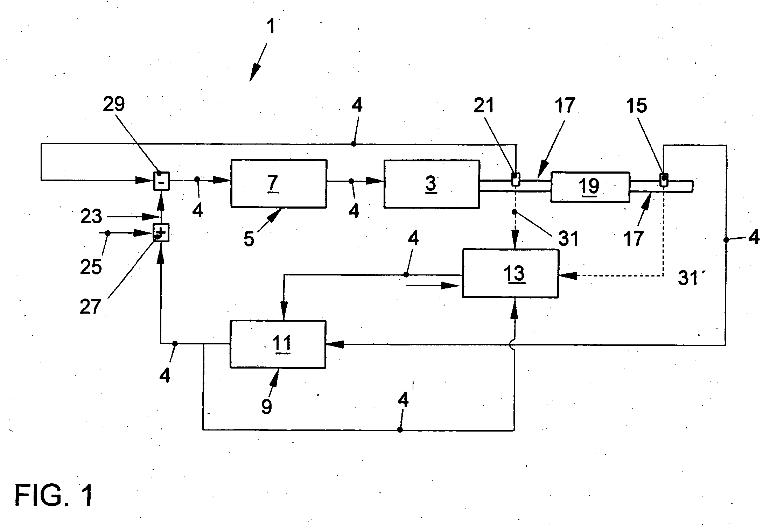

- Fig. 1:: zeigt ein Blockschaltbild einer Vorrichtung zur Lambdaregelung bei einem Verbrennungsmotor mit einem vorderen und hinteren Lambdaregelkreis und einem Sauerstoffmodell.

Fig. 1 zeigt ein Blockschaltbild einer Vorrichtung 1 zur Lambdaregelung bei einem Verbrennungsmotor 3. Signalverbindungen sowie deren Richtung sind durch Pfeile 4 gekennzeichnet. Die Vorrichtung 1 weist einen vorderen Regelkreis 5 mit einem vorderen Regler 7 und einen hinteren Regelkreises 9 mit einem hinteren Regler 11 auf. Der hintere Regler 11 ist eingangsseitig mit einer Modellierungseinheit 13 und einem hinteren Sauerstoffsensor 15 verbunden. Der hintere Sauerstoffsensor 15 befindet sich in einer Abgasanlage 17 des Verbrennungsmotors 3 stromab eines Katalysators 19. Stromab des Verbrennungsmotors 3 und stromauf des Katalysators 19 befindet sich in der Abgasanlage 17 ein vorderer Sauerstoffsensor 21. Bei den Sauerstoffsensoren 15, 21 kann es sich beispielsweise um Sprung- und/oder Breitbandsensoren handeln. Das Ausgangssignal dieser Sensoren kann optional direkt einer im Folgenden noch genauer erläuterten Vorrichtung 13 zugeführt werden, wie aus den Pfeilen 31 und 31' ersichtlich ist. In einer weiteren, jedoch in der Figur 1 nicht dargestellten Ausführungsform ist kein Lambdasensor 21 im vorderen Lambdaregelkreis verbaut. Stattdessen wird ein modellierter Lambdawert zur Verfügung gestellt, welcher beispielsweise aus motorischen Größen wie Kraftstoffeinspritzmenge und Luftmenge sowie adaptierten Einstellwerten und/oder komplexeren Modellen ermittelt wird und anstelle eines gemessenen Lambdawertes verwendet wird.

Die Vorrichtung 1 beziehungsweise der vordere Regelkreis 5 weist einen Sollwertpfad 23 mit einem Sollwerteingang 25 auf. In den Sollwertpfad 23 ist eine Additionsstelle 27 geschaltet. Die Additionsstelle 27 des Sollwertpfads 23 ist eingangsseitig dem Sollwerteingang 25 und dem hinteren Regler 11 zugeordnet. Mithin wird durch die Additionsstelle 27 die Stellgröße des hinteren Reglers 11 mit dem Sollwert der Lambdaregelung addiert. Ein Stelleingriff des hinteren Reglers 11 wirkt also ausschließlich über den Sollwertpfad 23 des vorderen Regelkreises 5 auf die Gemischbildung des Verbrennungsmotors 3 und damit auf den Lambdawert des Abgases des Verbrennungsmotors 3.

Der vordere Regelkreis 5 arbeitet unabhängig, wird lediglich von der Stellgröße des hinteren Regelkreises 9 geführt und beinhaltet den Sollwertpfad 23, eine Subtraktionsstelle 29 zur Bildung der Regelabweichung aus dem über den Sollwertpfad 23 eingespeisten Sollwert und dem Ausgangssignal des vorderen Sauerstoffsensors 21, den vorderen Regler 7, den Verbrennungsmotor 3 sowie dessen Abgasanlage 17 mit dem vorderen Sauerstoffsensor 21. Der hintere Regelkreis 9 arbeitet als übergeordneter Regler und beinhaltet mithin den gesamten vorderen Regelkreis 5 und außerdem den Katalysator 19, den stromab davon befindlichen hinteren Sauerstoffsensor 19 sowie die Vorrichtung 13.

Die Vorrichtung 13 ermittelt aus der in den Katalysator 19 eingetragenen und ausgetragene Sauerstoffmenge die bilanzierte Sauerstoffmenge seit einem Vorzeichenwechsel des Differenzwertes zwischen dem Ist-Wert des hinteren Sauerstoffsensors 19 und dem Soll-Lambdawert. Bevorzugt bildet die Vorrichtung 13 ferner eine Bewertungsgröße in Abhängigkeit von der bilanzierten Sauerstoffmenge.

Zur Berechnung der in den Katalysator 19 ein- beziehungsweise ausgetragenen Sauerstoffmenge kann der Stellwert des hinteren Regelkreises 9 herangezogen werden. Es wird also derjenige Sauerstoffein- beziehungsweise - Austrag bilanziert, der aus dem Regeleingriff des hinteren Regelkreises resultiert. Wie in Fig.1 dargestellt ist, wird hierbei der Ausgang des Reglers 11 mit einem Eingang der Vorrichtung 13 verbunden. Vorteilhaft ist diese Ausführungsform nicht ausschließlich aber insbesondere, falls gleichzeitig eine Vorwärtsbilanzierung für vorderen Regelkreis 5 verwendet wird um beispielsweise den Einfluss von dynamischen Störungen auf die Einhaltung des vorderen Sollwerts 25 zu kompensieren. Bei einer Vorwärtsbilanzierung wird der Sauerstoffeintrag beziehungsweise -Austrag stromab des Verbrennungsmotors 3 und stromauf des Katalysators 19, beispielsweise an der Stelle eines vorderen SauerstoffSensors 21 abzüglich des Einflusses der hinteren Regelung 11 ebenfalls bilanziert. Dabei wird beispielsweise vom Signal des vorderen Sauerstoff -Sensors der Stellwert des vorderen Reglers 7 abgezogen. Bevorzugt wird dabei im Mittel der Sollwert 25 des vorderen Regelkreises 5 gehalten.

Zur Berechnung der in den Katalysator 19 eingetragenen beziehungsweise ausgetragenen Sauerstoffmenge können die Ausgangssignale der Sauerstoffsonden 21 und 15 herangezogen werden. Alternativ, insbesondere in dem Fall, dass der vordere Lambdaregelkreis 3 mit einem modellierten Lambda-Ist-Wert arbeitet, wird an Stelle des Signals des vorderen Sauerstoffsensors 21 ein modellierter Lambdawert verwendet. Die Vorrichtung 13 verwendet im einfachsten Fall einen einfachen Integrator zu Bestimmung der ein- und ausgetragenen Sauerstoffmengen. Alternativ können auch kompliziertere Sauerstoffmodelle des Katalysators zur Berechnung des Sauerstoffein- und -austrages verwendet werden.

Bei der Bewertungsgröße der bilanzierten Sauerstoffmenge, kann es sich um eine absolute oder eine relative Bewertungsgröße handeln. Bei einer relativen Bewertungsgröße, wird die bilanzierte Sauerstoffmenge auf einen vorab definierten Wert der Sauerstoffspeicherfähigkeit des Katalysators bezogen. Der vorab definierte der Wert der Sauerstoffspeicherfähigkeit kann eine maximale Sauerstoffspeichermenge des Katalysators sein. Ferner kann die definierte Sauerstoffmenge in Abhängigkeit von den Eigenschaften der Katalysatorbeschichtung im Hinblick auf eine zu erreichende maximale Schadstoffkonvertierung, für einen vorgegebenen Schadstoff, vorzugsweise ein NOX-, HC- oder CO-Anteil festgelegt werden.

Die Bewertungsgröße kann in Abhängigkeit von dem aktuellen Wert einer Katalysatorkenngröße gewählt werden, wobei letztere den Zustand des Katalysators 19 charakterisiert. Vorzugsweise bezieht sich der aktuelle Zustand auf die Betriebsphase des Verbrennungsmotors 3 vor dem Vorzeichenwechsel des Differenzwerts. Hiermit kann auf eine einfache Weise berücksichtigt werden, dass der Katalysator 19 nach einer vorangegangenen Schubphase des Verbrennungsmotors 3 vollständig mit Sauerstoff gefüllt ist oder nach einer Fettbetriebsphase des Verbrennungsmotors 3 vollständig von Sauerstoff geleert ist. Ferner kann auch die Bewertungsgröße selbst von dem aktuellen Wert der Katalysatorgröße abhängig gewählt werden.

Von dem hinteren Regelkreis 11 wird ein Differenzwert des hinteren Ist-Lambdawerts zu dem hinteren Soll-Lambdawert gebildet. Erfindungsgemäß wird nach einem Vorzeichenwechsel des Differenzwerts von der Vorrichtung 13 die bilanzierte Sauerstoffmenge für ein Zeitintervall seit dem Vorzeichenwechsel ermittelt. Die Stellgröße des hinteren Lambdaregelkreises 9 wird zusätzlich in Abhängigkeit von dieser bilanzierten Sauerstoffmenge gewählt. Damit ist der Stelleingriff des hinteren Reglers und indirekt auch der Stelleingriff des vorderen Reglers anhängig vom Ausgangssignal des hinteren Sauerstoffsensors 15 und zusätzlich von der bilanzierten Sauerstoffmenge. Die Stellgröße des hinteren Regelkreises wirkenden Regelparameter kann vorteilhaft durch ein Kennfeld ermittelt werden. Das Kennfeld verwendet das Ausgangssignal des hinteren Sauerstoffsensors und die bilanzierte Sauerstoffmenge als Eingangsgrößen und ermittelt den Regelparameter. Bei dem Regelparameter kann es sich beispielsweise um einen Proportionalparameter und/oder einen Integralparameter handeln.

Bevorzugt ist alternativ oder zusätzlich vorgesehen, in Abhängigkeit von der bilanzierten Sauerstoffmenge einen Korrekturwert zur Erhöhung der Reglerstabilität zu bilden.

Im Vergleich hierzu wird für den Fall dass die Stellgröße des hinteren Regelkreises 9 nur vom Ausgangssignal des hinteren Sauerstoffsensors 15 abhängig ist, bei einer Abweichung dieses Signals von dem definierten Sollwert des hinteren Regelkreises eine Abmagerung oder eine Anfettung des Gemischs für den Motor vorgegeben, bis das Signal wieder den Sollwert erreicht, beziehungsweise ihn unterschreitet oder überschreitet. Durch die erfindungsgemäße Berücksichtigung der bilanzierten Sauerstoffmenge bei der Wahl der Stellgröße, wird die Regelqualität durch eine vorausschauende Auslegung der Regelung verbessert.

Dies soll für den Fall einer Überschreitung des Sollwertes durch das Signal, wobei das Gemisch fetter ist, als beabsichtigt, genauer dargestellt werden. Es soll daher eine Abmagerung des Gemischs vorgenommen werden, bis das Signal des hinteren Sauerstoffsensors 15 wieder auf den Sollwert abgefallen ist. Sobald das Signal den Sollwert kreuzt, das heißt, sobald ein Vorzeichenwechsel des Differenzwerts auftritt, wird die Berechnung des Sauerstoffein- und -austrages in den Katalysator 19 durch die Vorrichtung 13 neu getriggert, d.h. zunächst gleich Null gesetzt. Es wird dann die in einem Zeitintervall nach dem Vorzeichenwechsel im Katalysator 19 vorliegende bilanzierte Sauerstoffmenge berechnet. In Abhängigkeit von der bilanzierten Sauerstoffmenge wird eine Bewertungsgröße gebildet, anhand derer entschieden wird, ob ein weiterer Eintrag von magerem Abgas in den Katalysator 19 erforderlich ist, oder ob bereits eine ausreichende Menge Sauerstoff eingetragen wurde. Eine ausreichende Menge Sauerstoff, ist dann in den Katalysator 19 eingetragen, wenn diese für die Konvertierung der Schadstoffe, mit denen der Katalysator beladen ist, ausreicht. Da der Katalysator, insbesondere bedingt durch die Katalysatorbeschichtung eine Pufferwirkung aufweist, findet auch ohne einen weiteren Stelleingriff des vorderen oder hinteren Reglers eine Annäherung des Sensorsignals zum Sollwert hin statt. In diesem Fall kann also eine Reduzierung des Stelleingriffs des vorderen und/oder hinteren Lambdareglers vorgenommen werden. Für den Fall, dass mehr Sauerstoff aus dem Katalysator 19 ausgetragen wird, als beabsichtigt war, kann auch eine Erhöhung des Stelleingriffs vorgesehen werden.

### BEZUGSZEICHENLISTE

- 1: Vorrichtung
- 3: Verbrennungsmotor
- 4: Pfeil
- 5: vorderer Regelkreis
- 7: vorderer Regler
- 9: hinterer Regelkreis
- 11: hinterer Regler
- 13: Modellierungseinheit
- 15: hinterer Sauerstoffsensor
- 17: Abgasanlage
- 19: Katalysator
- 21: vorderer Sauerstoffsensor
- 23: Sollwertpfad
- 25: Sollwerteingang
- 27: Additionsstelle
- 29: Subtraktionsstelle
- 31: Pfeil
- 31': Pfeil

## Patentansprüche

1. Verfahren zur Lambdaregelung bei einem Verbrennungsmotor (3) mit zumindest einem in einer Abgasanlage (17) des Verbrennungsmotors (3) angeordneten Katalysator (19), wobei die Abgasanlage (17) einen vorderen Lambdaregelkreis (5) und einen hinteren Lambdaregelkreis (9) mit zumindest einem stromab des Katalysators (19) angeordneten hinteren Sauerstoffsensor (15) aufweist, wobei von dem hinteren Lambdaregelkreis (9) ein Ausgangssignal des hinteren Sauerstoffsensors (15) verarbeitet, ein Differenzwert zu einem hinteren Soll-Lambdawert gebildet und eine, auf den Soll-Lambdawert des vorderen Lambdaregelkreises (5) wirkende Stellgröße ausgegeben wird, **dadurch gekennzeichnet, dass** nach einem Vorzeichenwechsel des Differenzwerts für ein Zeitintervall seit dem Vorzeichenwechsel aus der in den Katalysator (19) eingetragenen und ausgetragenen Sauerstoffmenge eine bilanzierte Sauerstoffmenge ermittelt und die Stellgröße des hinteren Lambdaregelkreises (9) zusätzlich in Abhängigkeit von der bilanzierten Sauerstoffmenge gewählt wird.

2. Verfahren nach Anspruch 1, **gekennzeichnet durch** folgenden zusätzlichen Schritt:
In Abhängigkeit von der bilanzierten Sauerstoffmenge Bildung einer Bewertungsgröße zur Erhöhung der Reglerstabilität.

3. Verfahren nach Anspruch 1 oder 2, **gekennzeichnet durch** folgenden zusätzlichen Schritt:
Ermitteln eines auf die Stellgröße des hinteren Lambdaregelkreises (5) wirkenden Regelparameters **durch** ein Kennfeld, welches das Ausgangssignal des hinteren Sauerstoffsensors (15) und die Bewertungsgröße als Eingangsgröße verarbeitet und/oder
Ermitteln eines Korrekturfaktors zur Stellgröße.

4. Verfahren nach Anspruch 2 oder 3, **dadurch gekennzeichnet, dass** eine absolute Bewertungsgröße verwendet wird.

5. Verfahren nach Anspruch 2 oder 3, **dadurch gekennzeichnet, dass** eine auf eine vorgegebene Sauerstoffspeicherfähigkeit des Katalysators (19) bezogene relative Bewertungsgröße verwendet wird.

6. Verfahren nach Anspruch 5, **dadurch gekennzeichnet, dass** die vorgegebene Sauerstoffspeicherfähigkeit eine maximale Sauerstoffspeicherfähigkeit des Katalysators (19) ist.

7. Verfahren nach Anspruch 5, **dadurch gekennzeichnet, dass** die vorgegebene Sauerstoffspeicherfähigkeit einer maximalen Schadstoffkonvertierung für einen vorgegebenen Schadstoff, vorzugsweise einen NOX-, HC- oder CO-Anteil eines Abgases des Verbrennungsmotors (3) entspricht.

8. Verfahren nach zumindest einem der Ansprüche 3 bis 7, **dadurch gekennzeichnet, dass** die Bewertungsgröße und/oder die vorgegebene Sauerstoffspeicherfähigkeit in Abhängigkeit von dem aktuellen Wert einer Katalysatorkenngröße gewählt wird.

9. Verfahren nach Anspruch 8, **dadurch gekennzeichnet, dass** der aktuelle Wert der Katalysatorkenngröße einem vollständig mit Sauerstoff beladenen und/oder vollständig von Sauerstoff geleerten Katalysator (19) entspricht.

10. Verfahren nach Anspruch 8 oder 9, **dadurch gekennzeichnet, dass** der vordere Lambdaregelkreis (5) mit einem stromab des Verbrennungsmotors (3) und stromauf des Katalysators (19) angeordneten vorderen Sauerstoffsensor (21) versehen ist oder dem vorderen Lambdaregelkreis (5) ein modellierter Lambdawert zu Verfügung gestellt wird.

11. Verfahren nach einem der vorhergehenden Ansprüche, **dadurch gekennzeichnet, dass** die eingetragene und ausgetragene Sauerstoffmenge bei der Ermittlung der bilanzierten Sauerstoffmenge berücksichtigt wird, die aus einem Regeleingriff des hinteren Regelkreises resultiert.

12. Verfahren nach Anspruch 11, **dadurch gekennzeichnet, dass**, für den vorderen Regelkreis (5) eine Vorwärtsbilanzierung der an einer Stelle stromab des Verbrennungsmotors (3) und stromauf des Katalysators (19) eingetragenen und ausgetragenen Sauerstoffmenge verwendet wird.

13. Vorrichtung zur Lambdaregelung bei einem Verbrennungsbrennungsmotor (3) mit zumindest einem in einer Abgasanlage (17) des Verbrennungsmotors (3) angeordneten Katalysator (19), wobei die Abgasanlage (17) einen vorderen Lambdaregelkreis (5) und einen hinteren Lambdaregelkreis (9) mit zumindest einem stromab des Katalysators (19) angeordneten hinteren Sauerstoffsensor (15) aufweist und von dem hinteren Lambdaregelkreis ein Ausgangssignal des hinteren Sauerstoffsensors (15) verarbeitet ein Differenzwert zu dem hinteren Solllambdawert gebildet und einer auf dem Solllambdawert des vorderen Lambdaregelkreises (5) wirkende Stellgröße ausgegeben wird, **dadurch gekennzeichnet, dass** eine Vorrichtung (13) zur Ermittlung einer bilanzierten Sauerstoffmenge des Katalysators (19) aus der in den Katalysator (19) eingetragenen und ausgetragenen Sauerstoffmenge vorgesehen ist und dass nach einem Vorzeichenwechsel des Differenzwertes für ein Zeitintervall nach dem Vorzeichenwechsel die bilanzierte Sauerstoffmenge ermittelt wird und der hintere Lambdaregelkreis (9) ausgelegt ist, um die Stellgröße zusätzlich in Abhängigkeit von der bilanzierten Sauerstoffmenge zu bestimmen.

14. Vorrichtung zur Lambdaregelung nach Anspruch 13, **dadurch gekennzeichnet, dass** die Stellgröße des hinteren Lambdaregelkreises (9) auf einen Soll-Lambdapfad (23) des vorderen Lambdaregelkreises (5) wirkt.

15. Vorrichtung nach Anspruch 13 oder 14, **dadurch gekennzeichnet, dass** der vordere Lambdaregelkreis (5) einen stromab des Verbrennungsmotors (3) und stromauf des Katalysators (19) angeordneten vorderen Sauerstoffsensor aufweist.

16. Vorrichtung nach zumindest einem der Ansprüche 13 bis 15, **dadurch gekennzeichnet, dass** die Vorrichtung (13) zur Ermittelung der bilanzierten Sauerstoffmenge einen Integrator zur Bestimmung der eingetragenen Sauerstoffmenge umfasst.

## Claims

1. Method for performing lambda control in an internal combustion engine (3) with at least one catalytic converter (19) which is arranged in an exhaust system (17) of the internal combustion engine (3), wherein the exhaust system (17) has a front lambda control circuit (5) and a rear lambda control circuit (9) with at least one rear oxygen sensor (15) which is arranged downstream of the catalytic converter (19), wherein the rear lambda control circuit (9) processes an output signal of the rear oxygen sensor (15), forms the difference value with respect to a rear setpoint lambda value and outputs a manipulated variable which acts on the setpoint lambda value of the front lambda control circuit (5) **characterized in that** after the change of sign of the difference value a balanced quantity of oxygen is determined for a time interval since the change of sign, on the basis of the quantity of oxygen which is input into the catalytic converter (19) and the discharged quantity of oxygen, and the manipulated variable of the rear lambda control circuit (9) is additionally selected as a function of the balanced quantity of oxygen.

2. Method according to Claim 1, **characterized by** the following additional step:
formation of an evaluation variable as a function of the balanced quantity of oxygen, in order to increase the control of stability.

3. Method according to Claim 1 or 2, **characterized by** the following additional step:
determining a control parameter which acts on the manipulated variable of the rear lambda control circuit (5) by means of a characteristic diagram which processes the output signal of the rear oxygen sensor (15) and the evaluation variable as an input variable and/or
determining a correction factor with respect to the manipulated variable.

4. Method according to Claim 2 or 3, **characterized in that** an absolute evaluation variable is used.

5. Method according to Claim 2 or 3, **characterized in that** a relative evaluation variable which is related to a predefined oxygen storage capacity of the catalytic converter (19) is used.

6. Method according to Claim 5, **characterized in that** the predefined oxygen storage capacity is a maximum oxygen storage capacity of the catalytic converter (19).

7. Method according to Claim 5, **characterized in that** the predefined oxygen storage capacity corresponds to a maximum pollutant conversion for a predefined pollutant, preferably an NOx, HC or CO portion of an exhaust gas of the internal combustion engine (3).

8. Method according to at least one of Claims 3 to 7, **characterized in that** the evaluation variable and/or the predefined oxygen storage capacity are/is selected as a function of the current value of a catalytic converter characteristic variable.

9. Method according to Claim 8, **characterized in that** the current value of the catalytic converter characteristic variable corresponds to a catalytic converter (19) which has been loaded completely with oxygen and/or emptied completely of oxygen.

10. Method according to Claim 8 or 9, **characterized in that** the front lambda control circuit (5) is provided with a front oxygen sensor (21) which is arranged downstream of the internal combustion engine (3) and upstream of the catalytic converter (19), or a model lambda value is made available to the front lambda control circuit (5).

11. Method according to one of the preceding claims, **characterized in that** the quantity of oxygen which is input and the quantity of oxygen which is discharged are taken into account in the determination of the balanced quantity of oxygen which results from a control intervention by the rear control circuit.

12. Method according to Claim 11, **characterized in that** forward balancing of the quantity of oxygen which is input at a point downstream of the internal combustion engine (3) and upstream of the catalytic converter (19) and a discharged quantity of oxygen is used for the front control circuit (5).

13. Device for performing lambda control in an internal combustion engine (3) with at least one catalytic converter (19) which is arranged in an exhaust system (17) of the internal combustion engine (3), wherein the exhaust system (17) has a front lambda control circuit (5) and a rear lambda control circuit (9) with at least one rear oxygen sensor (15) which is arranged downstream of the catalytic converter (19), and the rear lambda control circuit (9) process an output signal of the rear oxygen sensor (15), forms a difference value with respect to the rear setpoint lambda value, and outputs a manipulated variable which acts on the setpoint lambda value of the front lambda control circuit (5), **characterized in that** a device (13) for determining a balanced quantity of oxygen of the catalytic converter (19) on the basis of the quantity of oxygen which is input into the catalytic converter (19) and the quantity of oxygen which is discharged is provided, and **in that** after a change of sign of the difference value the balanced quantity of oxygen is determined for a time interval after the change of sign, and the rear lambda control circuit (9) is designed to determine the manipulated variable additionally as a function of the balanced quantity of oxygen.

14. Device for performing lambda control according to Claim 13, **characterized in that** the manipulated variable of the rear lambda control circuit (9) acts on a setpoint lambda path (23) of the front lambda control circuit (5).

15. Device according to Claim 13 or 14, **characterized in that** the front lambda control circuit (5) has a front oxygen sensor which is arranged downstream of the internal combustion engine (3) and upstream of the catalytic converter (19).

16. Device according to at least one of Claims 13 to 15, **characterized in that** the device (13) for determining the balanced quantity of oxygen comprises an integrator for determining the quantity of oxygen which is input.

## Revendications

1. Procédé de régulation lambda dans un moteur à combustion (3) comportant au moins un catalyseur (19) disposé dans un système d'échappement (17) du moteur à combustion (3), dans lequel le système d'échappement (17) comprend un circuit de régulation lambda avant (5) est un circuit de régulation lambda arrière (9) comportant au moins un capteur d'oxygène arrière (15) disposé en aval du catalyseur (19), dans lequel un signal de sortie du capteur d'oxygène arrière (15) est traité par le circuit de régulation lambda arrière (9), une valeur différentielle est établie par rapport à une valeur lambda nominale arrière et une grandeur de réglage agissant sur la valeur lambda nominale du circuit de régulation lambda avant (5) est délivrée, **caractérisé en ce que**, après un changement de signe de la valeur différentielle, une quantité d'oxygène équilibrée est déterminée pendant un intervalle de temps depuis le changement de signe à partir de la quantité d'oxygène entrant dans le catalyseur (19) et sortant de celui-ci et la grandeur de réglage du circuit de régulation lambda arrière (9) est en outre sélectionnée en fonction de la quantité d'oxygène équilibrée.

2. Procédé selon la revendication 1, **caractérisé par** l'étape supplémentaire suivante :
une grandeur d'évaluation est établie en fonction de la quantité d'oxygène équilibrée pour augmenter la stabilité du régulateur.

3. Procédé selon la revendication 1 ou 2, **caractérisé par** l'étape supplémentaire suivante :
déterminer un paramètre de régulation agissant sur la grandeur de réglage du circuit de régulation lambda arrière (5) au moyen d'un champ caractéristique qui traite le signal de sortie du capteur d'oxygène arrière (15) et la grandeur d'évaluation en tant que grandeurs d'entrée et/ou
déterminer un facteur de correction de la grandeur de réglage.

4. Procédé selon la revendication 2 ou 3, **caractérisé en ce qu'**une grandeur d'évaluation absolue est utilisée.

5. Procédé selon la revendication 2 ou 3, **caractérisé en ce qu'**une grandeur d'évaluation relative par rapport à une aptitude au stockage d'oxygène maximale prédéterminée du catalyseur (19) est utilisée.

6. Procédé selon la revendication 5, **caractérisé en ce que** l'aptitude au stockage d'oxygène prédéterminée est une aptitude au stockage d'oxygène maximale du catalyseur (19).

7. Procédé selon la revendication 5, **caractérisé en ce que** l'aptitude au stockage d'oxygène prédéterminée correspond à une conversion de polluant maximale pour un polluant prédéterminé, de préférence un taux de NOX-, HC- ou CO- d'un gaz d'échappement du moteur à combustion (3).

8. Procédé selon au moins l'une des revendications 3 à 7, **caractérisé en ce que** la grandeur d'évaluation et/ou **en ce que** l'aptitude au stockage d'oxygène prédéterminée est/sont sélectionnée(s) en fonction de la valeur effective d'une grandeur caractéristique du catalyseur.

9. Procédé selon la revendication 8, **caractérisé en ce que** la valeur effective de la grandeur caractéristique du catalyseur correspond à un catalyseur (19) entièrement chargé d'oxygène et/ou entièrement vidé d'oxygène.

10. Procédé selon la revendication 8 ou 9, **caractérisé en ce que** le circuit de régulation lambda avant (5) est muni d'un capteur d'oxygène avant (21) disposé en aval du moteur à combustion (3) et en amont du catalyseur (19) ou **en ce qu'**une valeur lambda modélisée est fournie au circuit de régulation lambda avant (5).

11. Procédé selon l'une quelconque des revendications précédentes, **caractérisé en ce que** la quantité d'oxygène entrante et sortante lors de la détermination de la quantité d'oxygène équilibrée qui résulte de l'action de régulation du circuit de régulation arrière est prise en compte.

12. Procédé selon la revendication 11, **caractérisé en ce que**, pour le circuit de régulation avant (5), un équilibrage préalable d'une quantité d'oxygène entrante et sortante en un point situé en aval du moteur à combustion (3) et en amont du catalyseur (19) est utilisé.

13. Dispositif de régulation lambda dans un moteur à combustion (3) comportant au moins un catalyseur (19) disposé dans un système d'échappement (17) du moteur à combustion (3), dans lequel le système d'échappement (17) comprend un circuit de régulation lambda avant (5) et un circuit de régulation lambda arrière (9) comportant au moins un capteur d'oxygène arrière (15) disposé en aval du catalyseur (19) et un signal de sortie du capteur d'oxygène arrière (15) est traité par le circuit de régulation lambda arrière, une valeur différentielle est établie par rapport à la valeur lambda nominale arrière et une grandeur de réglage agissant sur la valeur lambda nominale du circuit de régulation lambda avant (5) est délivrée, **caractérisé en ce qu'**il est prévu un dispositif (13) destiné à déterminer une quantité d'oxygène équilibrée du catalyseur (19) à partir de la quantité d'oxygène entrant dans le catalyseur (19) et sortant de celui-ci et **en ce que**, après un changement de signe de la valeur différentielle, la quantité d'oxygène équilibrée est déterminée pendant un intervalle de temps depuis le changement de signe et le circuit de régulation lambda arrière (9) est en outre conçu pour déterminer la grandeur de réglage en fonction de la quantité d'oxygène équilibrée.

14. Dispositif de régulation lambda selon la revendication 13, **caractérisé en ce que** la grandeur de réglage du circuit de régulation lambda arrière (9) agit sur un trajet lambda nominal (23) du circuit de régulation lambda avant (5).

15. Dispositif selon la revendication 13 ou 14, **caractérisé en ce que** le circuit de régulation lambda avant (5) comprend un capteur d'oxygène avant disposé en aval du moteur à combustion (3) et en amont du catalyseur (19).

16. Dispositif selon au moins l'une des revendications 13 à 15, **caractérisé en ce que** le dispositif (13) comprend, pour déterminer la quantité d'oxygène équilibrée, un intégrateur destiné à déterminer la quantité d'oxygène entrante.
